Europäisches Patentamt

European Patent Office

Office européen des brevets

(19)

(11) EP 0 948 457 B1

(12) FASCICULE DE BREVET EUROPEEN

(45) Date de publication et mention
de la délivrance du brevet:
**09.04.2003  Bulletin 2003/15**

(51) Int Cl.⁷: **C01B 15/023**

(86) Numéro de dépôt international:
**PCT/FR97/01909**

(21) Numéro de dépôt: **97912250.4**

(22) Date de dépôt: **24.10.1997**

(87) Numéro de publication internationale:
**WO 98/018715 (07.05.1998 Gazette 1998/18)**

(54) **PROCEDE DE REGENERATION DES DERIVES DE L'ANTHRAQUINONE AU COURS DU PROCEDE DE SYNTHESE DE L'EAU OXYGENEE**

VERFAHREN ZUR REGENERIERUNG DER ANTHRACHINONDERIVATE BEI DER HERSTELLUNG VONWASSERSTOFFPEROXYD

METHOD FOR REGENERATING ANTHRAQUINONE DERIVATIVES DURING A SYNTHESIS PROCESS OF HYDROGEN PEROXIDE 30 %

(84) Etats contractants désignés:
**AT BE CH DE DK ES FI FR GB GR IE IT LI LU NL PT SE**

(30) Priorité: **25.10.1996  FR 9613028**

(43) Date de publication de la demande:
**13.10.1999  Bulletin 1999/41**

(73) Titulaire: **AXENS**
**92500 Rueil Malmaison (FR)**

(72) Inventeurs:
• **LE LOARER, Jean-Luc**
**F-30340 Salindres (FR)**
• **NEDEZ, Christophe**
**F-30340 Salindres (FR)**

• **TAXIL, Bernard**
**F-38450 Vif (FR)**

(74) Mandataire: **Jacobson, Claude**
**Cabinet Lavoix**
**2, Place d'Estienne d'Orves**
**75441 Paris Cedex 09 (FR)**

(56) Documents cités:
**FR-A- 1 468 707          FR-A- 2 195 590**
**GB-A- 798 237            US-A- 4 566 998**

Remarques:
Le dossier contient des informations techniques présentées postérieurement au dépôt de la demande et ne figurant pas dans le présent fascicule.

**Description**

La présente invention a trait au procédé de préparation de l'eau oxygénée à partir de composés de la quinone et plus spécifiquement à un nouveau moyen de traitement des solutions de travail mises en oeuvre dans ce procédé de fabrication.

Le procédé courant de fabrication de l'eau oxygénée est le procédé dit à l'anthraquinone. Ce procédé met en général en oeuvre un mélange de composés anthraquinones substitués et anthrahydroquinones comme, par exemple, la 2-éthylanthraquinone (EAQ), la 2-éthyl-5,6,7,8-tétrahydroanthraquinone (THEAQ), la 2-éthylanthrahydroquinone (EAHQ), la 2-éthyl-5,6,7,8-tétrahydroanthrahydroquinone (THEAHQ). Ces composés sont généralement dissous dans un mélange de solvants polaires et/ou apolaires, le tout constituant ce qui traditionnellement est appelé la solution de travail.

Ce procédé de fabrication de l'eau oxygénée consiste à réaliser des cycles de réductions et oxydations successives de la solution de travail.

Ainsi, selon la première étape du cycle, une hydrogénation catalytique de la solution de travail est réalisée, ce qui permet de convertir l'anthraquinone en anthrahydroquinone. Puis, cette hydrogénation est suivie d'une oxydation assurée en présence d'air, d'oxygène ou d'un mélange gazeux contenant de l'oxygène. Lors de cette oxydation, l'anthrahydroquinone est rétrogradée en anthraquinone avec formation d'eau oxygénée.

Une extraction, en général en présence d'eau, permet d'obtenir une solution aqueuse d'eau oxygénée qui peut être alors purifiée et concentrée.

En parallèle, la solution de travail est régénérée afin d'être utilisée à l'occasion du cycle suivant d'oxydation/réduction.

Pendant les étapes successives de réduction et d'oxydation de la solution de travail, une partie des composés de l'anthraquinone de départ est peu à peu convertie en produits de dégradation qui peuvent influencer le rendement de la synthèse de l'eau oxygénée.

Ainsi, des réactions secondaires conduisent notamment, au cours de l'hydrogénation, à des oxathrones et des anthranones, et, au cours de l'oxydation, à des époxydes de tétrahydroanthraquinone. Ces composés constituent des sous-produits qui occasionnent une augmentation de densité et de viscosité de la solution de travail et entraînent une désactivation du catalyseur d'hydrogénation, en cas d'accumulation.

D'autre part, au cours des réactions de réduction, les composés de l'anthraquinone de départ sont convertis en tétrahydroanthraquinones qui donnent des taux d'oxydation faibles d'où une perte de rendement.

Il n'est donc pas conseillé d'utiliser des solutions de travail contenant des proportions élevées de ces produits de dégradation de l'anthraquinone.

Pour résoudre ce problème, il a été proposé, dans le brevet US 2.739.875, de traiter les solutions de travail à base de composés de l'anthraquinone et contenant des produits de dégradation de ces dernières afin de les régénérer et les réutiliser dans le procédé de synthèse de l'eau oxygénée. Selon ce document, la solution de travail est mise au contact d'alumine activée ou de magnésie tout en chauffant. L'alumine a pour effet de rétrograder les produits de dégradation de l'anthraquinone en anthraquinone, notamment la tétrahydroanthraquinone en anthraquinone et les époxydes en tétrahydroanthraquinone, puis en anthraquinone.

Le brevet FR 1 468 707 a également apporté un perfectionnement à ce procédé de régénération de la solution de travail en proposant d'utiliser une alumine dopée par une substance alcaline.

Un but de la présente invention est d'améliorer encore la capacité de l'alumine à régénérer les produits de dégradation de l'anthraquinone et d'assurer un maintien de l'activité de ladite alumine sur un grand nombre de cycles de régénération.

Dans ce but, l'invention conceme un procédé de régénération d'une solution de travail pour la production d'eau oxygénée, ladite solution de travail contenant au moins un dérivé de l'anthraquinone et au moins un produit de dégradation de ce dérivé, ce produit étant issu des réductions et oxydations successives de la solution de travail, dans lequel on met en contact la solution de travail avec de l'alumine, ladite alumine étant issue d'une mise en forme par extrusion.

Le principe de l'invention tient donc à la manière dont l'alumine a été préparée tout particulièrement en ce qui concerne sa mise en forme.

Les billes d'alumine mises en oeuvre dans le procédé selon l'invention ne doivent pas être issues d'un procédé de mise en forme de l'alumine par technologie toumante. On entend par technologie tournante tout appareil dans lequel l'agglomération s'effectue par mise en contact et rotation du produit à granuler sur lui-même. Comme appareil de ce type, on peut citer le drageoir tournant, le tambour tournant.

Selon l'invention, il s'agit d'extrudés d'alumine. Ceux-ci sont généralement obtenus par malaxage puis extrusion d'une matière à base d'alumine, ladite matière pouvant être issue de la déshydratation rapide d'hydrargillite ou de la précipitation d'alumine boehmite ou pseudo-boehmite, et enfin calcination. Au cours du malaxage, l'alumine peut être mélangée à des additifs, tels que des porogènes. A titre d'exemple, les extrudés peuvent être préparés par le procédé de préparation décrit dans le brevet US 3.856.708.

De préférence, l'alumine utilisée dans le procédé selon l'invention présente un volume poreux total (VPT) d'au moins 0,25 ml/g, de préférence d'au moins 0,40 ml/g.

Ce volume poreux total (VPT) est mesuré de la façon suivante. On détermine la valeur de la densité de grain et de la densité absolue, les densités de grain (Dg) et absolue (Da) étant respectivement mesurées par la méthode de picnométrie au mercure et à l'hélium. Et le VPT est ensuite donné par la formule :

$$\frac{1}{Dg} - \frac{1}{Da}.$$

En général, on met en oeuvre des alumines de granulométrie d'au plus 5 mm, de préférence d'au plus 3,5 mm, encore plus avantageusement d'au plus 2,4 mm. La granulométrie correspond dans le cas d'une mise en forme par coagulation en gouttes au diamètre des billes et dans le cas d'extrudés au diamètre de leur section transversale.

De préférence, l'alumine présente une surface spécifique d'au moins 10 m$^2$/g, de préférence d'au moins 50 m$^2$/g.

Cette surface spécifique est une surface mesurée par la méthode BET.

On entend par surface mesurée par la méthode BET, la surface spécifique déterminée par adsorption d'azote conformément à la norme ASTM D 3663-78 établie à partir de la méthode BRUNAUER - EMMETT - TELLER décrite dans le périodique "The Journal of the American Society", 60, 309 (1938).

De manière préférentielle, le procédé selon l'invention met en oeuvre une alumine comprenant au moins un composé d'un élément choisi parmi les alcalins, les terres rares et les alcalino-terreux.

Ce composé peut être un oxyde, un hydroxyde, un sel ou un mélange de ceux-ci. On peut citer, à titre d'exemple, en plus des hydroxydes, les sulfates, nitrates, halogénures, acétates, formiates, carbonates et les sels d'acides carboxyliques.

On utilise de préférence les éléments choisis parmi le sodium, le potassium, le calcium et le lanthane.

Le taux d'alcalin, de terre rare et/ou d'alcalino-terreux est en général d'au moins 15 mmole pour 100 g d'alumine, de préférence d'au moins 30 mmole, encore plus préférentiellement compris entre 30 et 400 mmole, avantageusement compris entre 30 et 160 mmole.

Le dépôt de ce composé sur ou dans l'alumine peut être réalisé par toute méthode connue de l'homme du métier. Il peut être réalisé, par exemple, par imprégnation de l'alumine déjà préparée avec les éléments alcalins, de terres rares ou alcalino-terreux ou des précurseurs de ces éléments, ou par mélange des éléments alcalins, de terres rares ou alcalino-terreux ou des précurseurs avec l'alumine au cours de la mise en forme de ces matières. Ces éléments peuvent également être introduits dans l'alumine par coprécipitation de l'alumine et des éléments alcalins, de terres rares ou alcalino-terreux ou de leurs précurseurs.

Dans le cas d'un dépôt par imprégnation, celui-ci se fait de manière connue par mise en contact de l'alumine avec une solution, un sol ou un gel comprenant au moins un élément alcalin, de terres rares ou alcalino-terreux sous forme d'oxyde ou de sel ou d'un de leurs précurseurs.

L'opération est réalisée en général par trempage de l'alumine dans un volume déterminé de solution d'au moins un précurseur d'un élément alcalin, de terres rares ou alcalino-terreux. Par solution d'un précurseur d'un de ces éléments, on entend une solution d'un sel ou composé de l'élément, ou d'au moins un, des éléments alcalins, de terres rares ou alcalino-terreux, ces sels et composés étant thermiquement décomposables.

La concentration en sel de la solution est choisie en fonction de la quantité d'élément à déposer sur l'alumine.

Selon un mode préféré, ces éléments sont déposés par imprégnation à sec, c'est-à-dire que l'imprégnation est faite avec juste le volume de solution nécessaire à ladite imprégnation, sans excès.

L'alumine peut ensuite être soumise à une opération de séchage et éventuellement de calcination. Par exemple, elle peut être calcinée à une température située entre 150 et 1000 °C, de préférence entre 300 et 800 °C.

Lorsque le dépôt des éléments est réalisé au cours de la mise en forme, ces derniers ou leurs précurseurs sont mélangés à l'alumine avant sa mise en forme.

Le procédé de régénération selon l'invention convient particulièrement lorsque le produit de dégradation du dérivé de l'anthraquinone est une tétrahydroanthraquinone, un anthranone ou un époxyde d'une tétrahydroanthraquinone.

Selon le procédé de l'invention, la solution de travail à régénérer est mise au contact de l'alumine à une température comprise entre environ 40 et 160 °C. Cette régénération peut être réalisée en continu si bien que cette étape peut faire partie intégrante du procédé continu de synthèse, par exemple en régénérant une partie de la solution de travail à chaque cycle de réduction/oxydation, puis en la réintroduisant au cycle suivant.

D'autres composés que ceux cités précédemment peuvent être utilisés pour la synthèse de l'eau oxygénée, et notamment :

- la 2-t-butylanthraquinone, la 2-sec-amylanthraquinone et leurs correspondants 5,6,7,8-tétrahydroanthraquinones,
- les 2-alkyl-1,2,3,4-tétrahydroanthraquinones,
- les 1-alkyl-1,2,3,4-tétrahydroanthraquinones,
- les 1-alkyl-5,6,7,8-tétrahydroanthraquinones,
- les 1-alkényl-5,6,7,8-tétrahydroanthraquinones,
- la 2-méthyl-6-amylanthraquinone,
- la 2-méthyl-7-amylanthraquinone,
- la 2-t-amyltétrahydroanthraquinone,
- la 2-sec-isoamyl-tétrahydroanthraquinone.

Les exemples suivants illustrent l'invention sans toutefois en limiter la portée.

**EXEMPLES**

Les échantillons d'alumine testés sont prétraités sous courant d'air d'azote à 300 °C durant 3 heures afin d'éliminer toute trace d'humidité suite à leur stockage et afin de pouvoir comparer leur efficacité dans des conditions identiques.

On introduit 4 g d'alumine ainsi prétraités dans 25 g d'une solution de travail hydrogénée à 68 % (en volume) contenant 1,2 % (en poids) d'époxyde de tétrahydroéthylanthraquinone et maintenue à 72 °C. Après 3 heures d'agitation, une analyse de la solution est réalisée par chromatographie et le taux de conversion de l'époxyde est calculé.

Les résultats et autres données sont rassemblés dans le tableau ci-après.

| Alumine | Mise en forme | Granulométrie (mm) | Taux de $Na_2O$ en poids | Surface BET ($m^2/g$) | VPT (ml/g) | Taux de conversion (%) |
|---|---|---|---|---|---|---|
| 1 | TT* | 1,4-2,8 | 3710 ppm | 333 | 0,42 | 4 |
| 2 | TT* | 1,4-2,8 | 2% | 275 | 0,39 | 20 |
| 3 | ME* | 1,6 | 200 ppm | 218 | 0,58 | 33 |
| 4 | ME* | 1,6 | 2% | 182 | 0,56 | 62 |
| 5 | CG* | 1,8 - 2,1 | 2% | 174 | 0,60 | 58 |
| TT* : technologie tournante ME* : malaxage/extrusion CG* : coagulation en gouttes | | | | | | |

**Revendications**

1.  Procédé de régénérâtion d'une solution de travail pour la production d'eau oxygénée, ladite solution de travail contenant au moins un dérivé de l'anthraquinone et au moins un produit de dégradation de ce dérivé, ce produit étant issu des réductions et oxydations successives de la solution de travail, dans lequel on met en contact la solution de travail avec de l'alumine, **caractérisé en ce que** ladite alumine est issue d'une mise en forme par extrusion.

2.  Procédé selon la revendication 1, **caractérisé en ce que** l'alumine présente un volume poreux total d'au moins 0.25 ml/g, de préférence d'au moins 0,40 ml/g.

3.  Procédé selon la revendication 1 ou 2, **caractérisé en ce que** l'alumine présente une granulométrie d'au plus 5 mm, de préférence d'au plus 3,5 mm.

4.  Procédé selon l'une quelconque des revendications précédentes, **caractérisé en ce que** l'alumine présente une surface spécifique d'au moins 10 $m^2/g$, de préférence d'au moins 50 $m^2/g$.

5.  Procédé selon l'une quelconque des revendications précédentes, **caractérisé en ce que** l'alumine comprend au moins un composé d'un élément choisi parmi les alcalins, les terres rares et les alcalino-terreux.

6.  Procédé selon la revendication précédente, **caractérisé en ce que** le taux d'alcalin, de terres rares et/ou d'alcalino-terreux est d'au moins 15 mmole pour 100 g d'alumine, de préférence d'au moins 30 mmole, encore plus préférentiellement compris entre 30 et 400 mmole, avantageusement entre 30 et 160 mmole.

7. Procédé selon l'une quelconque des revendications précédentes, **caractérisé en ce que** le produit de dégradation du dérivé de l'anthraquinone est une tétrahydroanthraquinone, un anthranone ou un époxyde d'une tétrahydroanthraquinone.

## Claims

1. Method of regenerating a working solution for producing hydrogen peroxide, this working solution containing at least a derivative of anthraquinone and at least one product for degrading this derivative, this product coming from successive reductions and oxidations of the working solution, in which the working solution is put in contact with alumina, **characterised in that** the said alumina comes from forming by extrusion.

2. Method according to Claim 1, **characterised in that** the alumina has a total porous volume of at least 0.25 ml/gr, preferably of at least 0.40 ml/gr.

3. Method according to Claim 1 or 2, **characterised in that** the alumina has a grain size of 5 mm at the most, preferable of 3.5 mm at the most

4. Method according to any one of the above claims, **characterised in that** the alumina has a specific surface of at least 10 sq.m/gr, preferably of at least 50 sq.m/gr.

5. Method according to any one of the above claims, **characterised in that** the alumina includes at least a compound of an element chosen from among alkalis, rare earths and alkaline earths.

6. Method according to the above claim, charactezised in that the rate of alkali, of rare earths and/or of alkaline earths is at least 15 mmols to 100 gr of alumina, preferably of at least 30 mmols, and even more preferably between 30 and 400 mmols, advantageously between 30 and 160 mmols,

7. Method according to any one of the above claims, **characterised in that** the product of degradation of the derivative of anthraquinone is a tetrahydro anthraquinone, an anthranone or a tetrahydro anthraquinone epoxide.

## Patentansprüche

1. Verfahren zur Regenerierung einer Arbeitslösung zur Herstellung von Wasserstoffperoxyd, wobei die besagte Arbeitslösung mindestens ein Anthrachinonderivat und mindestens ein aus der aufeinanderfolgenden Reduzierung und Oxydierung der Arbeitslösung enstandenes Abbauprodukt dieses Derivats aufweist und die Arbeitslösung mit Alaminiumoxyd in Kontakt gebracht wird, **dadurch gekennzeichnet, dass** das besagte Aluminiumoxyd durch Extrusion ausgeformt wird.

2. Verfahren nach Anspruch 1, **dadurch gekennzeichnet, dass** das Aluminiumoxyd ein Gesamtporenvolumen von mindestens 0,25 ml/g, bevorzugt mindestens 0,40 ml/g aufweist.

3. Verfahren nach Anspruch 1 oder 2, **dadurch gekennzeichnet, dass** das Aluminiumoxyd eine Korngröße von höchstens 5 mm, bevorzugt höchstens 3,5 mm aufweist.

4. Verfahren nach irgendeinem der vorangehenden Ansprüche, **dadurch gekennzeichnet, dass** das Aluminiumoxyd eine spezifische Oberfläche von mindestens 10 $m^2$/g, bevorzugt 50 $m^2$/g aufweist.

5. Verfahren nach irgendeinem der vorangehenden Ansprache, **dadurch gekennzeichnet, dass** das Aluminiumoxyd mindestens eine Verbindung eines Elements aufweist, das aus Alkalinen, seltenen Enien und Erdalkalien ausgewählt wird.

6. Verfahren nach irgendeinem der vorangehenden Ansprüche, **dadurch gekennzeichnet, dass** der Gehalt an Alkalin, seltenen Erden und/oder Erdalkalien sich auf mindestens 15 mmol, bevorzugt auf mindestens 30 mmol und noch bevorzugter auf zwischen 30 und 400 mmol, vorteilhafterweise auf zwischen 30 und 160 mmol, auf 100 g Aluminiumoxyd beläuft.

7. Verfahren nach irgendeinem der vorangehenden Axisprtlche, **dadurch gekennzeichnet, dass** das Abbauprodukt des Anthrachinonderivats ein Tetrahydroanthrachinon, ein Anthranon oder ein Epoxyd eines Tetrahydroanthrachinons ist.